# EUROPÄISCHE PATENTANMELDUNG

(11) **EP 1 923 188 A1**
(43) Veröffentlichungstag der Anmeldung: **21.05.2008**
(21) Anmeldenummer: 07020044.9
(22) Anmeldetag: 12.10.2007
(51) Int. Cl.: B29B 9/10, B01J 2/04

(54) **Vorrichtung und Verfahren zur Partikelerzeugung**

(30) Priorität: 14.11.2006 DE 102006053632; 12.12.2006 EP 06025716; 28.11.2006 DE 102006056119
(71) Anmelder: Linde Aktiengesellschaft, 80807 München (DE)
(72) Erfinder: Himmen, Hans-Rudolf, 85778 Haimhausen (DE); Reinhardt, Hans-Jürgen, Dr., 87600 Kaufbeuren (DE)

(57) **Zusammenfassung**

Die Erfindung betrifft eine Vorrichtung und ein Verfahren zur Erzeugung von Granulat durch Schmelzkristallation mit einer Düsenvorkammer (1) zur Aufnahme einer Schmelze, mit Düsen (5) zur Erzeugung von Tropfen (8) der Schmelze und mit einem Kühlrohr (11) zur Abkühlung der Tropfen (8), wobei Mittel (13, 14, 18, 23) vorgesehen sind, um eine Unterkühlung der Düsen (5) zu verhindern.

## Beschreibung

Die Erfindung betrifft eine Vorrichtung zur Erzeugung von Granulat durch Schmelzkristallation mit einer Düsenvorkammer zur Aufnahme einer Schmelze, mit Düsen zur Erzeugung von Tropfen der Schmelze und mit einem Kühlrohr zur Abkühlung der Tropfen. Ferner bezieht sich die Erfindung auf ein Verfahren zur Erzeugung von Granulat durch Schmelzkristallation, wobei eine Schmelze durch Düsen geleitet und Tropfen der Schmelze erzeugt werden, welche anschließend kristallisiert werden.

Beim Schmelzkristallationsverfahren, welches auch als Prillen bezeichnet wird, wird eine flüssige Schmelze am Kopf eines Kühlrohres zugeführt und in gleichförmige Tropfen zerteilt. Diese fallen in einem Erstarrungsrohr nach unten und werden mit einem kryogenen Gasstrom in Kontakt gebracht. Dabei erstarren die Tropfen zu Perlen mit einem Durchmesser im Bereich von vorzugsweise 0,4 bis 2 mm.

Wesentlicher Bestandteil des Tropfenbildungssystems sind die Düsen, die sich am oberen Ende eines senkrechten Kühlrohres befinden. Die in der Düsenvorkammer befindliche Schmelze tritt durch die Düsen in das darunter angeordnete Kühlrohr ein und wird dabei in einheitliche Tropfen zerkleinert.

Meist ist hierzu eine Düsenplatte mit Bohrungen vorgesehen, in die einzelne Düsen eingeschraubt werden. Die Düsenplatte kann aber auch lediglich aus einer Platte mit Austrittsöffnungen geeigneter Größe bestehen. Auf der Oberseite der Düsenplatte befindet sich die heiße Schmelze, während die Unterseite der Düsenplatte an das Kühlrohr mit kalter Atmosphäre angrenzt. Für den vorwiegend anzutreffenden Fall, dass separate Düsen in die Düsenplatte eingeschraubt sind, weisen die Austrittsöffnungen der Düsen einen deutlichen Abstand zu der Düsenplatte auf. Dies bedeutet, dass die Austrittsöffnungen der Düsen der kalten Atmosphäre im Kühlrohr ausgesetzt sind und von der erhitzten Schmelze nur unzulänglich beheizt werden.

Daraus resultiert die Gefahr, dass sich die Düsen zusetzen, wenn die Temperatur der Schmelze nicht weit genug über der Schmelztemperatur des zu zertropfenden Stoffes liegt. Umgekehrt sollte die Temperatur der Schmelze aber möglichst gering gehalten werden, um den Kühlaufwand zur anschließenden Kristallation der Tropfen zu minimieren.

Aufgabe vorliegender Erfindung ist es daher, eine Vorrichtung und ein Verfahren der eingangs genannten Art aufzuzeigen, welche ein Zusetzen der Düsen auch bei einer geringen Temperaturdifferenz zwischen der Temperatur der Schmelze und deren Schmelztemperatur zuverlässig verhindern.

Diese Aufgabe wird durch eine Vorrichtung zur Erzeugung von Granulat durch Schmelzkristallation mit einer Düsenvorkammer zur Aufnahme einer Schmelze, mit Düsen zur Erzeugung von Tropfen der Schmelze und mit einem Kühlrohr zur Abkühlung der Tropfen gelöst, welche sich dadurch auszeichnet, dass Mittel vorgesehen sind, um eine Unterkühlung der Düsen zu verhindern.

Das erfindungsgemäße Verfahren zur Erzeugung von Granulat durch Schmelzkristallation, wobei eine Schmelze durch Düsen geleitet und Tropfen der Schmelze erzeugt werden, welche anschließend kristallisiert werden, ist dadurch gekennzeichnet, dass eine Unterkühlung der Düsen auf eine Temperatur, bei der die Tropfen in den Düsen kristallisieren, verhindert wird.

Erfindungsgemäß wird eine Unterkühlung der Düsen, das heißt eine Abkühlung auf eine Temperatur, bei der die Tropfen bereits in den Düsen kristallisieren würden, verhindert. Dies kann dadurch erreicht werden, dass geeignete Mittel zum Beheizen der Düsen vorgesehen sind und/oder dass die Düsen von der kalten Atmosphäre des darunter liegenden Kühlrohres thermisch abgeschirmt werden. Mit anderen Worten: Den Düsen kann entweder aktiv Wärme zugeführt werden oder die Wärmeabfuhr an die kalte Atmosphäre wird reduziert.

Dadurch wird es möglich, die Schmelze in der Düsenvorkammer auf einer Temperatur zu halten, die nur wenig über der Schmelztemperatur des zu zertropfenden Stoffes liegt. Die erhitzte Schmelze kühlt in den Düsen nicht unter ihre Erstarrungstemperatur ab und setzt damit die Düsen nicht zu. Unter dem Begriff "Düsen" werden hierbei alle Arten von Körpern oder Öffnungen verstanden, die dazu geeignet sind, die Schmelze in einzelne Tropfen zu zerteilen.

In einer bevorzugten Ausführung werden die Düsen, aus denen die erhitzte Schmelze in Tropfenform austritt, beheizt. In einer anderen bevorzugten Ausführungsform sind die Düsen in Düsenkanälen angeordnet, welche stromabwärts der Austrittsöffnungen der Düsen eine zu dem Kühlrohr offene Austrittskammer bilden. Der Austritt der Tropfen aus den Düsen erfolgt nicht direkt in die kalte Atmosphäre des Kühlrohres, sondern in die den Düsenöffnungen vorgelagerte Austrittskammer. Die Austrittskammer ist zwar in Richtung des Kühlrohres offen, so dass die Tropfen ungehindert in das Kühlrohr eintreten können. In der Austrittskammer wird sich jedoch eine gegenüber der Atmosphäre im Kühlrohr etwas wärmere Pufferatmosphäre einstellen, die verhindert, dass die Austrittsöffnungen der Düsen soweit abgekühlt werden, dass die Schmelze dort erstarrt und die Düsen zusetzt.

Von Vorteil sind außer den Mitteln zum Beheizen der Düsen separate Mittel zum Beheizen der in der Düsenvorkammer befindlichen Schmelze vorgesehen. Von Vorteil wird die Schmelze in der Düsenvorkammer in indirektem Wärmeaustausch mit einem flüssigen Wärmeträger, insbesondere einem Thermoöl, beheizt. Die Wandungen der Düsenvorkammer können hierzu beispielsweise als Doppelmantel ausgeführt sein, in deren Zwischenraum der Wärmeträger strömt und die Schmelze indirekt erwärmt bzw. auf der gewünschten Temperatur hält. Die Schmelze kann so kontrolliert auf einer Temperatur gehalten werden, die einen ausreichenden Abstand zum Schmelzpunkt des zu vertropfenden Stoffes aufweist.

Erfolgt die Beheizung der Schmelze unabhängig von der lokalen Beheizung der Düsen so hat dies den Vorteil, dass die Temperatur der Düsen in weiten Bereichen eingestellt werden kann, ohne dass beispielsweise die Schmelze überhitzt wird.

In einer bevorzugten Ausgestaltung der Erfindung weisen die Mittel zum Beheizen der Düsen ein elektrisches Heizelement auf. Das elektrische Heizelement kann zum Beispiel als flexibles, durch Widerstandsheizung erwärmtes Heizband ausgeführt sein, das ein- oder mehrlagig um die Düsen gewickelt oder geflochten wird.

Anstelle eines elektrischen Heizelements hat sich auch die Beheizung der Düsen mittels eines Wärmeträgerfluids bewährt. Vorzugsweise werden die Düsen von dem flüssigen Wärmeträger umspült und dabei auf die gewünschte Temperatur gebracht.

Die Beheizung der Düsen und die Beheizung der Schmelze kann über separate Heizvorrichtungen erfolgen oder über eine gemeinsame Heizvorrichtung. Wird die Schmelze über den indirekten Wärmeaustausch mit einem Wärmeträger, wie einem Thermoöl, beheizt, so kann zum Beispiel ein Teil des Wärmeträgers über Verbindungsleitungen abgezweigt und zu den Düsen geführt werden, um auch diese zu umspülen.

Die Erzeugung der Tropfen wird von Vorteil dadurch unterstützt, dass in der Düsenvorkammer ein kontrollierter Überdruck erzeugt wird. Dies erfolgt vorzugsweise durch Einleiten eines Inertgases, insbesondere von gasförmigem Stickstoff, in den Kopfraum der Düsenvorkammer oder durch hydrostatischen Druck, der über die Zulaufhöhe der Schmelze in die Düsenvorkammer eingestellt werden kann.

Es hat sich ebenso als günstig erwiesen, die Schmelze in der Düsenvorkammer in Schwingungen zu versetzen, so dass lokale Druckunterschiede in der Schmelze hervorgerufen werden und die Schmelze durch die Düsen befördert wird.

Von Vorteil werden die aus den Düsen austretenden Tropfen in dem sich anschließenden Kühlrohr in direktem Wärmeaustausch mit kaltem gasförmigen Stickstoff abgekühlt und vorverfestigt. Eine Durchkristallisation bzw. vollständige Durchhärtung der Tropfen wird in dem Kühlrohr nicht zwingend erreicht. Vorzugsweise erfolgt die Endverfestigung der Tropfen in einem Bad aus flüssigem Stickstoff. Die durch das Kühlrohr fallenden und zu Granulat vorverfestigten Tropfen werden in dem Stickstoffbad vollständig kristallisiert und mittels eines Austragssystems aus dem Stickstoffbad transportiert. Der beim Betrieb der Prill-Anlage entstehende gasförmige Stickstoff wird vorzugsweise zur Inertisierung eingesetzt, besonders bevorzugt zur Inertisierung der Abfüllgebinde.

Die Erfindung eignet sich insbesondere zur Anwendung bei Schmelzen mit einer Temperatur zwischen 40°C und 300°C. Bei den Schmelzen handelt es sich in der Regel um Stoffe aus der Fein- und Spezialchemie, wie beispielsweise ungesättigte Fettsäuren als Zwischenprodukte für die Kosmetikindustrie oder Farbstoffpartikel für Tintenstrahldruckerfarben. Die Schmelzen werden dabei durch Erwärmung in den flüssigen Zustand überführt.

Die Erfindung hat zahlreiche Vorteile gegenüber den bekannten Vorrichtungen bzw. Verfahren zum Prillen:

Erfindungsgemäß wird die Schmelze nur knapp über den Schmelzpunkt des Stoffes erhitzt, wodurch Heizenergie gespart wird. Außerdem wird die zur nachfolgenden Aushärtung der erzeugten Tropfen benötigte Kühlenergie, beispielsweise in Form von kryogenem Stickstoff, reduziert. Zudem können auch empfindlichere Schmelzen, die durch Überhitzung geschädigt werden, problemlos verarbeitet werden.

Ein Zusetzen der Düsen durch vorzeitig erstarrte Schmelze wird verhindert, wodurch der Prillprozess nur noch bei einem Produktwechsel gestoppt werden muss. Die ansonsten bei Düsenverstopfungen notwendigen aufwändigen Reinigungen der Düsen entfallen. Dadurch wird eine höhere Produktivität der Anlage erreicht.

Die erfindungsgemäße Vorrichtung ist einfach und robust ausgeführt, einfach regelbar und kann universell eingesetzt werden. Je nach den äußeren Gegebenheiten können die Abmessungen der Anlage, deren Durchmesser und Höhe sowie die Anzahl, Größe und Anordnung der Düsen leicht variiert werden.

Die Erfindung sowie weitere Einzelheiten der Erfindung werden im Folgenden anhand von in den Zeichnungen dargestellten Ausführungsbeispielen näher erläutert. Hierbei zeigen:
- Figur 1: eine Prill-Anlage nach dem Stand der Technik,
- Figur 2: eine erfindungsgemäße Prill-Anlage,
- Figur 3: eine Variante der erfindungsgemäßen Prill-Anlage,
- Figur 4: eine weitere Variante der Erfindung, und
- Figur 5: noch eine alternative Ausführung der Erfindung.

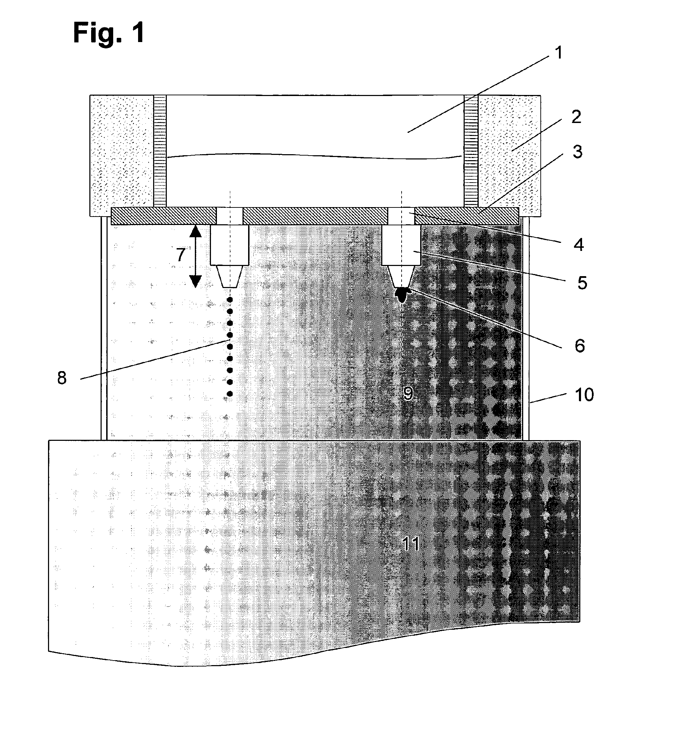

Figur 1 zeigt das Tropfenbildungssystem einer sogenannten Prill-Anlage zur Erzeugung von Granulat durch Schmelzkristallisation, wie sie aus dem Stand der Technik bekannt ist. Am Kopf der gezeigten Vorrichtung befindet sich eine Düsenvorkammer 1, in welche ein schmelzförmiger Stoff eingebracht wird. Die Düsenvorkammer 1 wird mittels eines heißen Thermoöls, welches sich in einem die Düsenvorkammer 1 umgebenden Ringkanal 2 befindet, auf einer Temperatur über der Schmelztemperatur des Stoffes gehalten.

Der Boden 3 der Düsenvorkammer 1 weist mehrere Bohrungen 4 auf, in die von unten Düsen 5 geschraubt sind. Die Düsenaustrittsöffnungen 6 der Düsen 5 besitzen einen von der Länge der Düsen 5 abhängigen Abstand 7 von dem Boden 3 der Düsenvorkammer 1.

Im normalen Betrieb der Anlage wird der schmelzförmige Stoff aus der Düsenvorkammer 1 durch kontrollierten Überdruck in die Düsen 5 geleitet, welche den kontinuierlichen Schmelzstrom in feine Tropfen 8 zerteilen. Die Tropfen 8 fallen durch einen Sichtabschnitt 9, der mit Sichtfenstern 10 versehen ist. Durch die Sichtfenster 10 kann der Tropfenbildungsprozess beobachtet und überwacht werden.

An den Sichtabschnitt 9 schließt sich ein Kühlrohr 11 an, in dem die Tropfen in direkten Kontakt mit einer Atmosphäre aus kaltem gasförmigem Stickstoff kommen, abgekühlt werden und dabei zu dem gewünschten Granulat kristallisieren.

Bei dieser bekannten Vorrichtung kann der relativ große Abstand 7 zwischen den Düsenaustrittsöffnungen 6, die der kalten Stickstoff-Atmosphäre ausgesetzt sind, und dem Boden 3 der Düsenvorkammer 1 zu Problemen führen. Die Düsen 5 werden durch die umgebende kalte Atmosphäre stark abgekühlt und umgekehrt durch das heiße Schmelzbad nur wenig erwärmt, so dass die schmelzförmigen Tropfen in den Düsen 5 teilweise so weit abkühlen, dass diese zumindest teilweise kristallisieren und die Düsenaustrittsöffnungen 6 verstopfen.

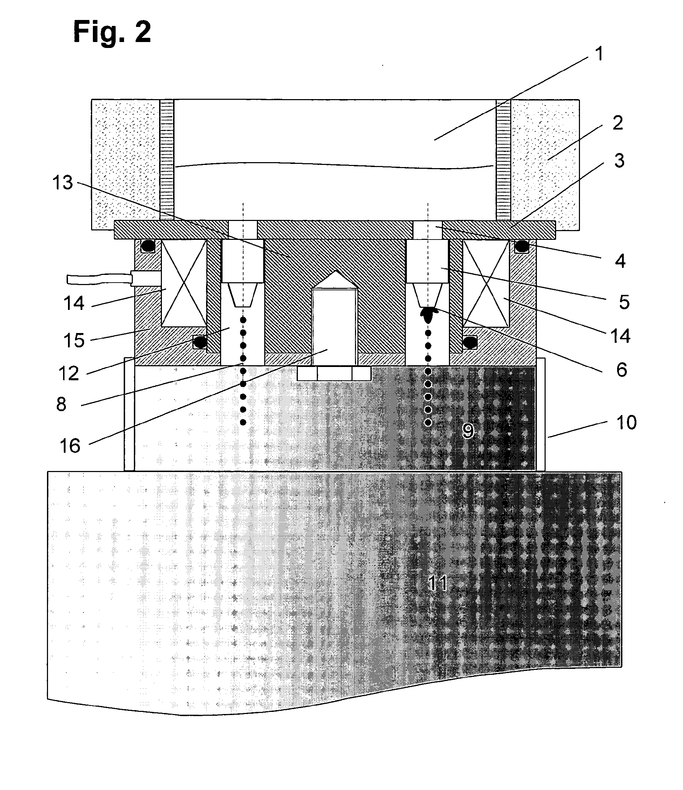

In Figur 2 ist eine erfindungsgemäße Anlage zum Prillen schematisch dargestellt. Die Düsenvorkammer 1 mit dem umgebenden Ringkanal 2 zur Aufnahme eines heißen Thermoöls ist ebenso wie bei der in Figur 1 gezeigten Anlage aufgebaut. Der Boden 3 der Düsenvorkammer 1 weist ebenfalls Bohrungen 4 mit einschraubbaren Düsen 5 auf. Die Bohrungen 4 mit den Düsen 5 sind vorzugsweise kreisringförmig angeordnet.

Die Düsen 5 mit den Düsenaustrittsöffnungen 6 ragen jedoch nicht direkt in die kalte Atmosphäre des darunter befindlichen Sichtabschnitts 9 beziehungsweise des Kühlrohres 11, sondern befinden sich in Düsenkanälen 12. Hierzu ist ein gut wärmeleitender, in der Regel metallischer Düsenaufnahmekörper 13 vorgesehen, der bei der Ausführung gemäß Figur 2 eine zylindrische Form besitzt. In Richtung der Zylinderachse sind in den Düsenaufnahmekörper 13 Düsenkanäle 12 gebohrt, deren Anordnung und Durchmesser der Anordnung und Größe der Düsen 5 entsprechen. Die Höhe des Düsenaufnahmekörpers 13 wird so gewählt, dass sie den Abstand 7 der Düsenaustrittsöffnungen der Düsen 5 vom Boden 3 übersteigt.

Der Düsenaufnahmekörper 13 bildet mit dem Boden 3 der Düsenvorkammer 1 eine Einheit, so dass die Düsen 5 in die Düsenkanäle 12 aufgenommen werden. Auf diese Weise sind die Düsen 5 nicht direkt der kalten Atmosphäre des Kühlrohres 11 bzw. des Sichtabschnitts 9 ausgesetzt. Zudem wird ein Teil der Wärmeenergie des Schmelzbades über den Düsenaufnahmekörper 13 zu den Düsen 5 geleitet. Je nach Länge der Düsenkanäle 12 kann damit die Abkühlung der Düsen 5 soweit reduziert werden, dass die Schmelze in den Düsen 5 nicht mehr erstarrt und diese blockiert.

Zusätzlich ist bei der Ausführung gemäß Figur 2 noch ein hohlzylinderförmiges Heizelement 14 vorgesehen, welches den Düsenaufnahmekörper 13 umschließt. Das Heizelement 14 kann beispielsweise elektrisch beheizt werden oder analog zu dem Ringkanal 2 mit heißem Thermoöl oder einem anderen Wärmeträger beschickt werden. Zur Befestigung und Isolierung des Heizelements 14 wird ein, vorzugsweise möglichst schlecht wärmeleitender, Heizelementhalter 15 über eine Schraubverbindung 16 an dem Düsenaufnahmekörper 13 befestigt.

Mittels des Heizelements 14 kann die Temperatur des Bereichs um die Düsen 5 und um die Düsenkanäle 12 in einem weiten Temperaturbereich eingestellt werden. Vorzugsweise arbeitet das Heizelement 14 unabhängig von der Art und/oder dem Grad der Erwärmung der Schmelze in der Düsenvorkammer 1. Die Temperatur der Düsen 5 wird dabei so gewählt, dass diese unter dem Einfluss der kalten Atmosphäre im Kühlrohr 11 nicht zu stark abkühlen und ein Verstopfen der Düsenaustrittsöffnungen 6 durch erstarrende Schmelze verhindert wird.

Unterhalb des Heizelements 14 ist der Sichtabschnitt 9 vorgesehen, der in diesem Fall mit einem Rundum-Sichtfenster 10, beispielsweise aus Plexiglas, versehen ist, welches von allen Seiten eine uneingeschränkte Beobachtung des Tropfenbildungsprozesses erlaubt.

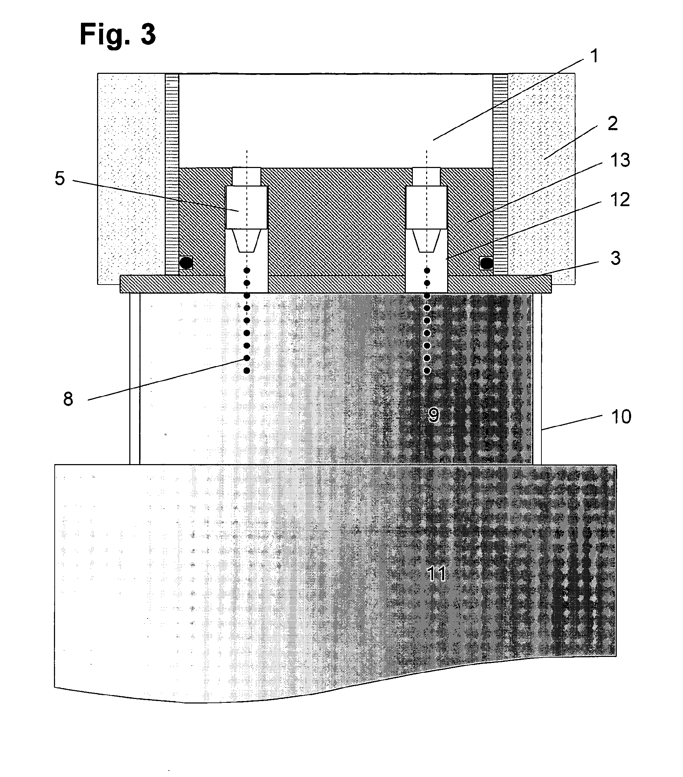

Figur 3 zeigt eine weitere Ausgestaltung der Erfindung, bei der die Heizung der Düsen 5 mit derselben Heizung erfolgt wie die Erwärmung der in der Düsenvorkammer 1 befindlichen Schmelze. Auch in der in Figur 3 gezeigten Ausführung ist ein Düsenaufnahmekörper 13 vorgesehen, welcher mit Düsenkanälen 12 zur Aufnahme der Düsen 5 versehen ist. Der Düsenaufnahmekörper 13 ist in diesem Fall in die Düsenvorkammer 1 hineinverlegt. Der Ringkanal 2 mit dem Wärmeträger, beispielsweise einem heißen Thermoöl, umgibt nicht nur die Düsenvorkammer 1, sondern auch den Düsenaufnahmekörper 13. Auf diese Weise wird der Düsenaufnahmekörper 13, der aus einem gut wärmeleitenden Material besteht und die Wärme an die Düsen 5 weiterleitet, durch den in dem Ringkanal 2 befindlichen Wärmeträger erwärmt.

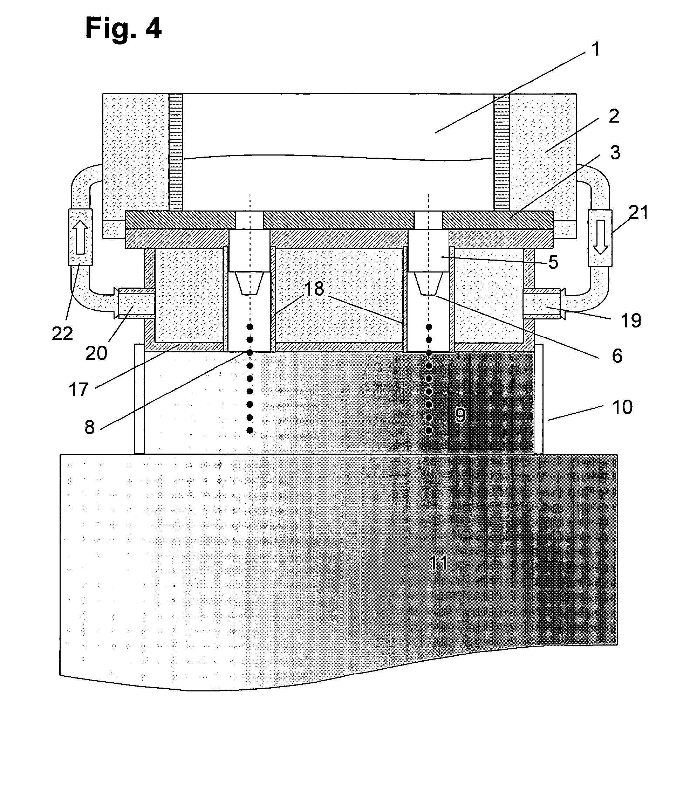

In Figur 4 ist eine weitere bevorzugte Ausgestaltung der Erfindung dargestellt. Der Düsenaufnahmekörper 17 ist in diesem Fall als Hohlkörper ausgeführt. Die Düsenkanäle werden durch Hülsen 18 gebildet, die in den hohlen Düsenaufnahmekörper 17 hineinragen. Der Düsenaufnahmekörper 17 weist eine Zuführung 19 sowie eine Ableitung 20 für einen Wärmeträger auf, der das Innere des Düsenaufnahmekörpers 17 durchströmt und dabei die Hülsen 18 umspült. Gemäß Figur 4 wird zur Heizung der Schmelze in der Düsenvorkammer 1 und zur Beheizung des Düsenaufnahmekörpers 17 dasselbe Heizmittel verwendet. Hierzu wird das Heizmittel über flexible Verbindungsleitungen 21, 22 zwischen dem Ringkanal 2 und dem Düsenaufnahmekörper 17 im Kreis gefahren.

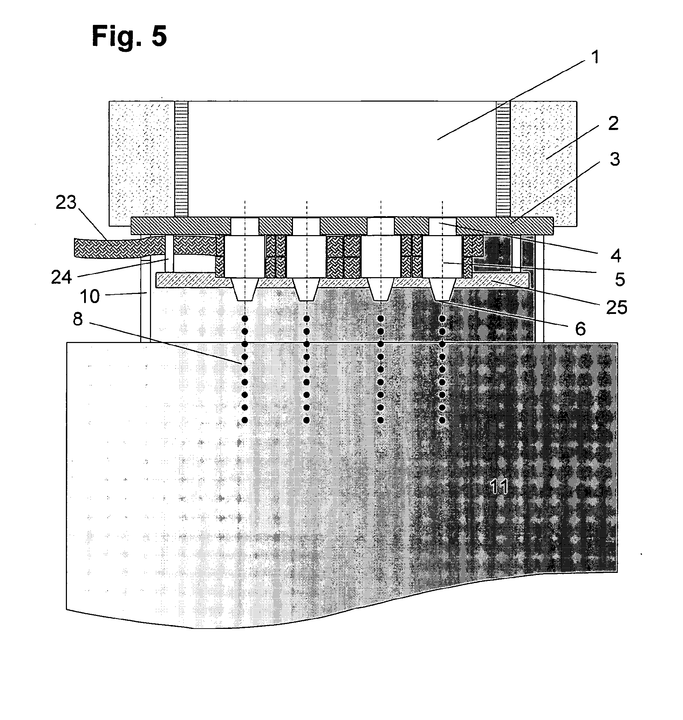

Figur 5 zeigt eine weitere Alternative zur Heizung der Düsen 5. Das Heizelement ist als flexibles Band 23 ausgeführt, welches direkt in ein, zwei oder mehr Lagen um die Düsen 5 gewickelt wird. Zur Fixierung des Bandes 23 wird von unten über Abstandshalter oder Stege 24 eine Platte 25 am Boden der Düsenvorkammer 1 befestigt.

## Patentansprüche

1. Vorrichtung zur Erzeugung von Granulat durch Schmelzkristallation mit einer Düsenvorkammer (1) zur Aufnahme einer Schmelze, mit Düsen (5) zur Erzeugung von Tropfen (8) der Schmelze und mit einem Kühlrohr (11) zur Abkühlung der Tropfen (8), **dadurch gekennzeichnet, dass** Mittel (13, 14, 18, 23) vorgesehen sind, um eine Unterkühlung der Düsen (5) zu verhindern.

2. Vorrichtung nach Anspruch 1, **dadurch gekennzeichnet, dass** die Mittel (13, 14, 18, 23) als Mittel zum Beheizen der Düsen (5) ausgebildet sind.

3. Vorrichtung nach einem der Ansprüche 1 oder 2, **dadurch gekennzeichnet, dass** die Düsen (5) in Düsenkanälen (12, 18) angeordnet sind, welche stromabwärts der Austrittsöffnungen (6) der Düsen (5) eine zu dem Kühlrohr (11) offene Austrittskammer bilden.

4. Vorrichtung nach einem der Ansprüche 1 bis 3, **dadurch gekennzeichnet, dass** separate Mittel (2) zum Beheizen der in der Düsenvorkammer (1) befindlichen Schmelze vorgesehen sind.

5. Vorrichtung nach einem der Ansprüche 1 bis 4, **dadurch gekennzeichnet, dass** die Mittel zum Beheizen der Düsen ein elektrisches Heizelement (14, 23) aufweisen.

6. Vorrichtung nach einem der Ansprüche 1 bis 5, **dadurch gekennzeichnet, dass** die Mittel (2, 21, 19, 20, 22) zum Beheizen der Düsen (5) auch zum Beheizen der Schmelze in der Düsenvorkammer (1) dienen.

7. Vorrichtung nach einem der Ansprüche 1 bis 6, **dadurch gekennzeichnet, dass** die Mittel zum Beheizen der Düsen (5) ein Wärmeträgerfluid umfassen, welches die Düsen (5) umspült.

8. Vorrichtung nach einem der Ansprüche 1 bis 7, **dadurch gekennzeichnet, dass** Mittel zur Erzeugung eines Überdrucks in der Düsenvorkammer (1) vorgesehen sind.

9. Vorrichtung nach einem der Ansprüche 1 bis 8, **dadurch gekennzeichnet, dass** Mittel zur Erzeugung einer Schwingung der in der Düsenvorkammer (1) befindlichen Schmelze vorgesehen sind.

10. Verfahren zur Erzeugung von Granulat durch Schmelzkristallation, wobei eine Schmelze durch Düsen (5) geleitet und Tropfen (8) der Schmelze erzeugt werden, welche anschließend kristallisiert werden, **dadurch gekennzeichnet, dass** eine Unterkühlung der Düsen (5) auf eine Temperatur, bei der die Tropfen in den Düsen (5) kristallisieren, verhindert wird.

11. Verfahren nach Anspruch 10, **dadurch gekennzeichnet, dass** die Schmelze durch Erwärmung auf eine Temperatur zwischen 40°C und 300°C in die flüssige Phase überführt wurde und zum Bereich der Fein- und Spezialchemie gehört.
